(19) Europäisches Patentamt

**European Patent Office**

Office européen des brevets

(11) Veröffentlichungsnummer: **0 467 933 B1**

(12) **EUROPÄISCHE PATENTSCHRIFT**

(45) Veröffentlichungstag der Patentschrift: **12.10.94**

(21) Anmeldenummer: **90906154.1**

(22) Anmeldetag: **12.04.90**

(86) Internationale Anmeldenummer:
**PCT/EP90/00585**

(87) Internationale Veröffentlichungsnummer:
**WO 90/12043 (18.10.90 90/24)**

(51) Int. Cl.⁵: **C08F 214/26**, C08F 216/14,
G02B 1/04

(54) **VERWENDUNG VON TRANSPARENTEN THERMOPLASTISCHEN FORMMASSEN ZUR HERSTELLUNG VON LICHTWELLENLEITERN.**

(30) Priorität: **13.04.89 DE 3912148**

(43) Veröffentlichungstag der Anmeldung:
**29.01.92 Patentblatt 92/05**

(45) Bekanntmachung des Hinweises auf die
Patenterteilung:
**12.10.94 Patentblatt 94/41**

(84) Benannte Vertragsstaaten:
**AT BE CH DE ES FR GB IT LI NL SE**

(56) Entgegenhaltungen:
**EP-A- 0 077 998**
**EP-A- 0 130 052**
**EP-A- 0 193 963**
**DE-A- 2 650 979**

(73) Patentinhaber: **HOECHST AKTIENGESELL-
SCHAFT**

**D-65926 Frankfurt (DE)**

(72) Erfinder: **BLICKLE, Peter**
**Hattersheimer Strasse 14**
**D-6233 Kelkheim (DE)**
Erfinder: **COUTANDIN, Jochen**
**Pestalozzistrasse 9**
**D-6536 Langenlonsheim (DE)**
Erfinder: **HERBRECHTSMEIER, Peter**
**Friedrich-Stolze-Strasse 10**
**D-6240 Königstein/Taunus (DE)**
Erfinder: **HINTZER, Klaus**
**Rupertusstrasse 3**
**D-8269 Burgkirchen (DE)**
Erfinder: **WIENERS, Gerhard**
**Glauburgstrasse 87**
**D-6000 Frankfurt am Main (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf die Verwendung einer transparenten thermoplastische Formmasse zur Herstellung von Lichtwellenleitern, die sich zur Übertragung von Lichtsignalen eignen. Die Erfindung bezieht sich auch auf die Lichtwellenleiter, die diese transparente thermoplastische Formmasse enthalten.

Fadenförmige Lichtwellenleiter bestehen zumeist aus einem Kern und einem Mantel mit unterschiedlichen Brechungsindices. Um große Übertragungslängen der Lichtsignale zu erzielen, sollen zum einen Kern- und Mantelmaterial sowenig Licht wie möglich absorbieren, zum anderen das Kernmaterial einen höheren Brechungsindex aufweisen als der Mantel.

Die bisher für Lichtwellenleiter am häufigsten eingesetzten Kernmaterialien sind Homo- und Copolymere des Methylmethacrylats mit Brechungsindices von etwa 1,49. Als Mantelmaterialien wurden hauptsächlich fluorhaltige Polymere, z.B. aus Fluoralkylestern von Acrylsäure oder Methacrylsäure (Brechungsindices zwischen 1,37 und 1,43) oder aus Copolymeren des Tetrafluorethylens, des Hexafluorpropens oder des Vinylidenfluorids (Brechungsindices zwischen 1,36 und 1,39), eingesetzt. Absorptionsbeiträge der Kohlenstoff-Wasserstoff-Bindungen in den Kernpolymeren vermindern die Transparenz des Kernmaterials und begrenzen die erreichbare Übertragungslänge.

Darüberhinaus sind bereits polymere Lichtwellenleiter aus Polymeren beschrieben worden, die sich von 2-Fluoracrylsäureestern insbesondere aliphatischer Alkohole ableiten und die sowohl in der Alkohol- als auch in der $\beta$-Stellung der 2-Fluoracrylsäurekomponente Deuteriumatome enthalten können (vgl. EP 128517). Diese Polymeren weisen Brechungsindices zwischen 1,45 und 1,60 und Glasübergangstemperaturen zwischen 100 und 200°C auf. Polymere 2-Fluoracrylsäureester fluorhaltiger Alkohole niedrigeren Brechungsindexes werden gemäß der genannten Druckschrift als Mantelmaterialien für optische Fasern eingesetzt.

Herstellung und Eigenschaften der vorgenannten Poly(2-fluoracrylsäurefluoralkylester) sind ebenfalls bekannt (EP 128516). Sie weisen Brechungsindices zwischen 1,36 bis 1,44 und Erweichungstemperaturen zwischen 80 und 140°C auf.

Darüberhinaus wurde bereits vorgeschlagen, Lichtwellenleiter aus Poly(2-fluoracrylsäureestern) oder Poly(2,3-difluoracrylsäureestern) im Kern und Copolymeren aus TFE, Perfluoralkylvinylethern und $\omega$-Methoxycarbonyl(perfluoralkylvinylether) im Mantel eines Lichtwellenleiters einzusetzen.

Copolymere die Verbindungen der Formel I und weitere copolymerisierbare Monomere enthalten und eine hohe Beständigkeit gegenüber tiefen Temperaturen aufweisen werden in der EP-A-077 998 beschrieben. Die Glasübergangstemperaturen dieser Verbindungen liegen im Bereich von -44 bis -32°C.

Weiterhin bekannt ist die Verwendung von Copolymeren auf der Basis von Tetrafluorethylen und Verbindungen der Formel II zur Herstellung von wässrigen Dispersionen (EP-A-193 963) sowie zur Herstellung von fluorierten Copolymeren mit Ionenaustauschgruppen welche für Diaphragmen bei der Elektrolyse verwendet werden (DE-A-26 50 979).

Copolymere aus Tetrafluorethylen und einem Monomeren der Formel (II) werden in der US-A-4 138 426 beschrieben. Es werden jedoch keine Angaben bezüglich der Eigenschaften dieser Polymere gemacht.

Aufgabe war, eine Formmasse zu finden, welche sich zur Herstellung von optischen Gegenständen hoher Transparenz, insbesondere von Lichtwellenleitern, die eine große Übertragungslänge für Lichtsignale im Wellenlängenbereich des sichtbaren Lichts ermöglichen, eignet.

Die erfindungsgemäß verwendete transparente thermoplastische Formmasse enthält

a) 40 bis 90 Gew.-% aus Einheiten, die sich vom Tetrafluorethylen ableiten, und

b) 60 bis 10 Gew.-% aus Einheiten, die sich zu 0 bis 100 %, bezogen auf die Summe der Verbindungen I und II, von Verbindungen der Formel I ableiten

$$CF_2 = CF - O - (CF_2\text{-}CF(CF_3)\text{-}O)_m - (CF_2)_n - CF_3 \qquad (I),$$

worin m eine ganze Zahl von 0 bis 1 und n eine ganze Zahl von 1 bis 5 ist, und die sich zu 100 bis 0 %, bezogen auf die Summe der Verbindungen I und II, von Verbindungen der Formel II ableiten

$$CF_2 = CF - O - (CF_2\text{-}CF(CF_3)\text{-}O)_p - (CF_2)_q - COO - R \qquad (II),$$

worin p eine ganze Zahl von 0 bis 3 und q eine ganze von 1 bis 4 ist und R ein Wasserstoffatom, einen $C_6$-$C_{10}$-Arylrest oder einen $C_1$-$C_8$-Alkylrest bedeutet.

Die erfindungsgemäß verwendete Formmasse enthält (a) 40 bis 90, vorzugsweise 70 bis 85 Gew.-% an Einheiten, die sich vom Tetrafluorethylen ableiten.

Weiterhin enthält die Formmasse zu (b) 60 bis 10, vorzugsweise 30 bis 15 Gew.-% aus Einheiten, die sich von Verbindungen der Formeln I oder II ableiten:

$$CF_2 = CF - O - (CF_2-CF(CF_3)-O)_m - (CF_2)_n - CF_3 \qquad (I),$$

$$CF_2 = CF - O - (CF_2-CF(CF_3)-O)_p - (CF_2)_q - COO - R \qquad (II),$$

In diesen Formeln ist m 0 oder 1, ist n eine ganze Zahl von 1 bis 5, vorzugsweise 2 bis 4, ist p eine ganze Zahl von 0 bis 3, vorzugsweise 0 oder 1, ist q eine ganze Zahl von 1 bis 4, vorzugsweise 2 oder 3, und ist R ein Wasserstoffatom, eine $C_6$-$C_{10}$-, vorzugsweise $C_6$-$C_7$-Arylgruppe oder eine $C_1$-$C_8$-, vorzugsweise $C_1$-$C_3$-Alkylgruppe. Vorzugsweise sind in R die Wasserstoffatome teilweise oder ganz durch Fluor-, Chlor- oder Deuteriumatome ersetzt. Besonders bevorzugt ist R ein Wasserstoffatom oder eine Methyl-, Trifluorethyl-, Pentafluor-n-propyl-, Tetrafluor-n-propyl- oder Hexafluor-i-propylgruppe oder deren teilweise oder ganz deuterierte Derivate.

Der Anteil der Verbindungen der Formel I und II beträgt 0 bis 100 und 100 bis 0 %, jeweils bezogen auf die Summe der Verbindungen I und II.

Zusätzlich zu diesen beiden Monomergruppen I und II können zur Herstellung der erfindungsgemäßen Formmasse Monomere eingesetzt werden, welche mit Tetrafluorethylen und den Verbindungen I und II copolymerisierbar sind, beispielsweise Chlortrifluorethylen, Trifluorethylen, Fluorethylen, Vinylidenfluorid. Ihr Anteil an der Gruppe (b) der Monomeren beträgt 0 bis 50, vorzugsweise 0 bis 20 Gew.-%.

Darüber hinaus kann die erfindungsgemäß verwendete Formmasse auch Mischungen von in ihrer Zusammensetzung unterschiedlichen Copolymeren der Verbindungen (a) und (b) enthalten. Möglich sind auch Mischungen von Copolymeren von Verbindungen (a) und (b) und einem oder mehreren anderen fluorhaltigen Copolymeren.

Die Herstellung der erfindungsgemäß verwendeten Formmasse kann nach an sich bekannten Verfahren erfolgen, beispielsweise durch Suspensions-, Emulsions-, Fällungs- oder Massepolymerisation.

Darüberhinaus kann diese Formmasse auch mittels Oxidation, Verseifung und anschließende Veresterung von ω-H-Perfluoralkylseitengruppen von Polymeren, die neben weiteren Monomereinheiten ω-H-Perfluoralkylvinylether-Einheiten enthalten, hergestellt werden.

Die erfindungsgemäß verwendete Formmasse wird vorzugsweise zur Herstellung von Lichtwellenleitern eingesetzt. Dabei ist aufgrund ihres niedrigen Brechungsindexes ihre Verwendung als Mantelmaterial bevorzugt. Als Kernmaterialien können dabei Polymere, die Monomereinheiten enthalten, die sich von Estern der Methacrylsäure, der Acrylsäure, der 2-Fluoracrylsäure oder der 2,3-Difluoracrylsäure, vom Styrol oder von substituierten Styrolen ableiten, sowie Polycarbonate verwendet werden.

Von Vorteil ist es, die Formmasse in Form des Lichtwellenleiter-Mantelmaterials zu vernetzen. Zu diesem Zweck kann der fertige Lichtwellenleiter beispielsweise mit einem Sauerstoffplasma behandelt werden.

Als Kernmaterialien werden solche Polymere bevorzugt verwendet, die eine höhere Transparenz als PMMA aufweisen. Dazu gehören Polymere aus teilweise und aus vollständig deuteriertem MMA, aus ganz oder teilweise fluoriertem Styrol, aus 2-Fluor- und 2,3-Difluoracrylsäuremethylestern, aus 2,3-Difluoracrylsäureestern, 2-Fluoracrylsäureestern, Methacrylsäureestern oder Acrylsäureestern chlor-, fluor- und bromhaltiger, offenkettiger, alicyclischer oder bicyclischer Alkohole oder Benzyl- oder Phenylalkohole oder deren ganz oder teilweise deuterierten Derivaten sowie Copolymere dieser Verbindungen untereinander und mit MMA sowie deuterium-, fluor-, chlor- oder bromhaltige Polycarbonate.

Besonders bevorzugt werden Polymere, die im wesentlichen aus 2-Fluoracrylsäuremethylester, aus 2-Fluor- und 2,3-Difluoracrylsäureestern, Methacrylsäureestern und Acrylsäureestern drei-, vier- und fünffach fluorierter, chlorierter und bromierter Phenole, des Trifluor- und des Hexafluorisopropanols, des Perfluor-2,3-dimethyl-2-butanols, des Perfluor- und des Perchlorcyclopentanols und -hexanols, des 1,4,5,6,7,7-Hexachlor- und -Hexabrombicycloheptenols, des 5,5,6,6-Tetrakis(trifluormethyl)bicycloheptanols, des 5,6-Difluor-5,6-bis(trifluormethyl)bicycloheptanols, des 5,5,6,6-Tetrafluorbicycloheptanols oder des (1,4,5,6,7,7-Hexachlorbicycloheptenyl)methanols und deren teilweise oder vollständig deuterierten Derivaten erhalten werden.

Bei der Auswahl von Kern- und Mantelmaterial ist zu beachten, daß maximale Übertragungslängen für Lichtsignale in Lichtwellenleitern dann erreicht werden, wenn die Brechungsindices des Kermaterials $n_K$ und des Mantelmaterials $n_M$ eines Lichtwellenleiters die Gleichung

$$n_K - n_M > C$$

mit C = 0,013, vorzugsweise C = 0,03, besonders bevorzugt C = 0,1, erfüllen.

Die erfindungsgemäß verwendete Formmasse (aus TFE, Perfluoralkylvinylethern und ω-Alkoxycarbonylperfluoralkylvinylether) wird vorzugsweise dann als Mantelmaterial eingesetzt, wenn sich das Kernmaterial von fluorhaltigen Polymeren ableitet, die einen niedrigen Brechungsindex aufweisen. Insbesondere wird die Formmasse als Mantelmaterial eingesetzt in Lichtwellenleitern, deren Kernmaterial aus Polymeren besteht, die sich von Trifluorstyrol, Pentafluorstyrol, Perfluorstyrol, Estern fluorhaltiger Alkohole der Methacrylsäure, der Acrylsäure, der 2-Fluoracrylsäure und der 2,3-Difluoracrylsäure oder deren ganz oder teilweise deuterierten Derivaten ableiten und welche Brechungsindices von unter 1,44 aufweisen.

Ganz besonders bevorzugt wird die Formmasse dann als Mantelmaterial eingesetzt, wenn der Brechungsindex des Kernmaterials weniger als 1,37 beträgt. Solch niedrige Brechungsindices weisen Kernmaterialien auf, die solche Einheiten enthalten, welche sich von dem Pentafluor-n-propylester, dem Hexafluorisopropylester, dem 2-Trifluormethyl-3,3,3-trifluor- oder 2-Trifluormethyl-3,3,3,2-tetrafluor-n-propylester, dem Perfluor-2,3-dimethyl-2-butylester, dem Perfluorcyclopentyl und -hexylester, dem 5,5,6,6-Tetrakis-(trifluormethyl)bicycloheptylester, dem 5,5,6,6Tetrafluorbicycloheptylester der Methacrylsäure, der Acrylsäure, der 2-Fluoracrylsäure oder der 2,3-Difluoracrylsäure oder deren teilweise oder vollständig deuterierten Derivaten ableiten.

Die nachfolgenden Beispiele sollen die Erfindung erläutern.

**Beispiel 1**

In ein emailliertes Polymerisationsgefäß mit 4000 cm³ Volumen, das mit einem Impeller-Rührer versehen war, gab man 3000 cm³ entionisiertes Wasser, 20 g Perfluoroctansäure sowie 18,6 g Ammoniumoxalat und stellte diese wäßrige Phase mit Ammoniak auf einen pH-Wert von 5 ein. Das Gefäß wurde sodann mit Stickstoff und mit Tetrafluorethylen gespült. Man legte 150 g eines Gemisches aus 59 g ω-H-Perfluorpropylvinylether (HPPVE) und 341 g Perfluorpropylvinylether (PPVE) vor, erwärmte auf 32°C, preßte TFE bis zum Erreichen eines Drucks von 5 bar auf und startete die Polymerisation mit 100 cm³ einer 0,1 gew.-%igen wäßrigen Kaliumpermanganatlösung. Unter Beibehaltung der genannten Temperatur wurden 20 dm³ TFE kontinuierlich zugeführt. Nach Zugabe von 5, 8, 11, 14 und 17 dm³ TFE wurden jeweils 50 cm³ des HPPVE-PPVE-Gemisches zudosiert. Während der Reaktionszeit von 135 Minuten wurden kontinuierlich weitere 160 cm³ der genannten Kaliumpermanganatlösung zugepumpt, um die Reaktionsgeschwindigkeit konstant zu halben. Nach Beendigung der Reaktion wurde der Kessel vorsichtig entspannt und mit Stickstoff gespült. Das Polymer wurde aus der nahezu wasserklaren Dispersion mit Salzsäure ausgefällt und unter Rühren durch Zugabe einer kleinen Menge Methylenchlorid agglomeriert. Man wusch mit Wasser und trocknete das Produkt in der Wirbelschicht. Es wurden 765 g Copolymeres mit einem Schmelzindex von 1,7 g/10 min, gemessen bei 300°C und 11 kg Belastung, erhalten. Das Copolymere enthielt 3 mol-% ω-HPPVE und 17 mol-% ω-PPVE (bestimmt aus dem $^{18}$F-Hochtemperaturspektrum). Dieses Produkt wurde dann, wie in der EP-A-88 285, Beispiel 2, beschrieben, mit Peroxodisulfuryldifluorid umgesetzt und anschließend mit Methanol verestert. Der Umsetzungsgrad betrug mehr als 89 %, die Ausbeute war nahezu quantitativ. Man erhielt 770 g funktionalisiertes Produkt.

**Beispiel 2**

Der Versuch in Beispiel 1 wurde wiederholt, wobei anstelle des Gemisches aus PPVE und ω-H-Perfluorpropylvinylether 97 g Methyl-perfluor-4-oxahept-5-enoat und 303 g PPVE eingesetzt wurden und die Umsetzung mit Peroxydisulfuryldifluorid und Methanol unterblieb. Auf diesem Wege wurde ein Produkt erhalten, das zu 5 mol-% aus Methyl-perfluor-4-oxahept-5-enoat-, zu 15 mol-% aus PPVE- und zu 80 mol-% aus TFE-Einheiten (bestimmt mittels $^{19}$F-Hochtemperaturspektrum) bestand. Der Schmelzindex betrug 2 g/10 min bei 300°C und 11 kg Belastung.

**Beispiel 3**

Das Verfahren des Beispiels 2 wurde wiederholt, wobei anstelle des Gemisches aus Methyl-perfluor-oxahept-5-enoat und PPVE ein Gemisch aus 142 g Pentafluor-n-propyl-perfluor-4-oxahept-5-enoat und 303 g PPVE, aufgeteilt in eine Portion von 165 g des Gemisches, die vorgelegt wurde, und 5 Portionen von je 54 g des Gemisches, die nachdosiert wurden, verwendet wurde. Auf diesem Wege wurde ein Produkt erhalten, das zu 5 mol-% und zu 15 mol-% aus PPVE- sowie zu 80 mol-% aus TFE-Einheiten bestand. Der Schmelzindex betrug 2,7 g/10 min bei 300°C und 11 kg Belastung.

**Beispiel 4**

Ein Gemisch aus 50 g 2,3-Difluoracrylsäurehexafluorisopropylester und 50 g 2,3-Difluoracrylsäuremethylester wurde mit 0,3 g t-Butylperoxyisopropylcarbonat versetzt , mittels eines Membranfilters (Porenweite 45 nm) filtriert und in ein partikelfrei gespültes Glasgefäß gefüllt. Das Gemisch wurde entgast, indem es für die Dauer von 20 min mit Heliumgas durchperlt wurde, wobei der Sauerstoffpartialdruck über dem Gemisch auf weniger als ein Tausendstel des Sättigungswerts herabgesetzt wurde. Das Gemisch wurde in Heliumatmosphäre auf - 60 °C abgekühlt und das Gefäß evakuiert. Das Glasgefäß wurde danach zugeschmolzen und das Produkt zunächst für 90 h auf 65 °C, später im Verlauf von 50 h gleichmäßig schnell auf 115 °C erwärmt. Nach dem Abkühlen des Reaktionsgemisches wurde ein glasklares Polymerisat erhalten, das die nachstehenden Eigenschaften aufwies.

| Viskositätszahl: | 61 cm$^3$/g |
|---|---|
| Restmonomergehalt Methylester | 0,02 % |
| - Hexafluorisopropylester | 0,14 % |
| Brechungsindex | 1,38 |
| Glasumwandlungstemperatur | 120 °C |

**Beispiel 5**

Ein Gemisch aus 80 g 2-Fluoracrylsäurehexafluorisopropylester-d$_3$ und 20 g 2-Fluoracrylsäuremethylester-d$_2$ wurde mit 0,02 g t-Butylperoxyisopropylcarbonat und 0,15 g Butylmerkaptan versetzt und mittels eines Membranfilters (Porenweite 45 nm) filtriert und in ein partikelfrei gespültes Glasgefäß gefüllt. Das Gemisch wurde entgast, indem es für die Dauer von 20 min mit Heliumgas durchperlt wurde, wobei der Sauerstoffpartialdruck über dem Gemisch auf ein Tausendstel des Sättigungswerts herabgesetzt wurde. Das Gemisch wurde in Heliumatmosphäre auf - 60 °C abgekühlt und das Gefäß evakuiert. Das Glasgefäß wurde danach zugeschmolzen und das Produkt zunächst für 15 h auf 75 °C, später für weitere 24 h auf 115 °C erwärmt. Nach dem Abkühlen des Reaktionsgemisches wurde ein glasklares Polymerisat erhalten, das die nachstehenden Eigenschaften aufwies.

| Viskositätszahl | 47 cm$^3$/g |
|---|---|
| Restmonomergehalt Methylester | 0,011 % |
| - Hexafluorisopropylester | 0,015 % |
| Brechungsindex | 1,376 |
| Glasumwandlungstemperatur | 149 °C |

**Beispiel 6**

Ein Gemisch aus 80 g 2-Fluoracrylsäurehexafluorisopropylester-d$_3$ und 20 g 2-Fluoracrylsäuremethylester-d$_5$ wurde mit 0,02 g t-Butylperoxyisopropylcarbonat und 0,15 g Butylmerkaptan versetzt und mittels eines Membranfilters (Porenweite 45 nm) filtriert und in ein partikelfrei gespültes Glasgefäß gefüllt. Das Gemisch wurde entgast, indem es für die Dauer von 20 min mit Heliumgas durchperlt wurde, wobei der Sauerstoffpartialdruck über dem Gemisch auf ein Tausendstel des Sättigungswerts herabgesetzt wurde. Das Gemisch wurde in Heliumatmosphäre auf - 60 °C abgekühlt und das Gefäß evakuiert. Das Glasgefäß wurde danach zugeschmolzen und das Produkt zunächst für 15 h auf 75 °C, später für weitere 24 h auf 115 °C erwärmt. Nach dem Abkühlen des Reaktionsgemisches wurden ein glasklares Polymerisat erhalten, das die nachstehenden Eigenschaften aufwies.

| Viskositätszahl | 51 cm$^3$/g |
|---|---|
| Restmonomergehalt Methylester | < 0,01 % |
| - Hexafluorisopropylester | 0,025 % |
| Brechungsindex | 1,376 |
| Glasumwandlungstemperatur | 148°C |

Die Viskositätszahl (in cm$^3$/g) wurde an Lösungen von einem Gewichtsteil des Polymeren in 100 Gew.-Teilen Essigester bei 25°C bestimmt.

Der Restmonomergehalt (angegeben in Gew.-Teilen pro 100 Teile des Polymeren) wurde gaschromatographisch mit Hilfe eines inneren Standards an Lösungen von 5 Gew.-Teilen des Polymerisats in 100 Teilen eines geeigneten Lösemittels bestimmt.

Der Brechungsindex wurde mit Hilfe eines Abbe-Refraktometers an bis zur Konstanz des Meßwerts getrockneten Gießfilmen des Polymeren aus einem geeigneten, niedrigsiedenden Lösemittel gemessen.

Die Glasumwandlungstemperatur wurde mittels Differentialkalorimetrie (DSC) bei einer Aufheizrate von 20°C/min bestimmt.

**Beispiel 7**

Ein Polymerisat, das nach den Angaben in Beispiel 4 hergestellt worden war, wurde in einem Kolbenextruder aufgeschmolzen und zum Kern eines Lichtwellenleiters extrudiert. Das Polymerisat nach Beispiel 1 wurde in einen Doppelschneckenextruder mit Entgasungszone eingespeist und zum Mantel des Lichtwellenleiters verarbeitet. Die Eigenschaften des Lichtwellenleiters werden in der Tabelle beschrieben.

**Beispiel 8**

Ein Polymerisat, das nach den Angaben in Beispiel 5 hergestellt worden war, wurde in einem Kolbenextruder aufgeschmolzen und zum Kern eines Lichtwellenleiters extrudiert. Das Polymerisat nach Beispiel 2 wurde in einen Doppelschneckenextruder mit Entgasungszone eingespeist und zum Mantel des Lichtwellenleiters verarbeitet. Die Eigenschaften des Lichtwellenleiters werden in der Tabelle beschrieben.

**Beispiel 9**

Ein Polymerisat, das nach den Angaben in Beispiel 6 hergestellt worden war, wurde in einem Kolbenextruder aufgeschmolzen und zum Kern eines Lichtwellenleiters extrudiert. Das Polymerisat nach Beispiel 3 wurde in einen Doppelschneckenextruder mit Entgasungszone eingespeist und zum Mantel des Lichtwellenleiters verarbeitet. Die Eigenschaften des Lichtwellenleiters werden in der Tabelle beschrieben.

Tabelle

| Beispiel | Kernmaterial gemäß Beispiel | Mantelmaterial gemäß Beispiel | Dämpfung 650 nm [dB/km] | Dämpfung 830 nm [dB/km] | Dämpfung bei 650 nm nach 2 h Wärmeschrank | | Dämpfung bei 650 nm nach Biegetest [dB/km] |
|---|---|---|---|---|---|---|---|
| | | | | | [dB/km] | [°C] | |
| 7 | 4 | 1 | 140 | 350 | 153 | 80 | 160 |
| 8 | 5 | 2 | 48 | 88 | 58 | 80 | 55 |
| 9 | 6 | 3 | 40 | 46 | 48 | 80 | 39 |

Die Dämpfung wurde an 30 m langen Stücken der Lichtwellenleiter dadurch bestimmt, daß Licht einer Wellenlänge (650 nm, 830 nm) an einem Ende des Lichtwellenleiters eingekoppelt und die Lichtintensität am anderen Ende in Abhängigkeit von der Länge des Lichtwellenleiters, der nach jeder Messung um eine bestimmte Länge verkürzt wurde, gemessen wurde. Aus einer logarithmischen Auftragung der Lichtintensitäten gegen die Länge des Lichtwellenleiters in km ergibt sich die Dämpfung als Steigung.

Zur Prüfung der Wärmebeständigkeit wurde je ein Stück des Lichtwellenleiters in normaler Umgebungsluft zwei Stunden bei den angegebenen Temperaturen gelagert und anschließend die Dämpfung gemessen.

Zur Prüfung der Biegefestigkeit ("Biegetest") wurde ein 20 m langes Stück eines Lichtwellenleiters in die Dämpfungsmeßeinrichtung eingespannt, die Dämpfung bestimmt und ein 50 cm langes Stück dieses Lichtwellenleiters um einen Stab von 10 mm Durchmesser gewunden. Der Lichtwellenleiter wurde wieder vom Stab gelöst und gerade ausgerichtet. Danach wurde die transmittierte Lichtintensität erneut gemessen und die Erhöhung der Dämpfung infolge der Deformation des Lichtwellenleiters, umgerechnet in dB/km, zur Dämpfung des ungeschädigten Lichtwellenleiters hinzugezählt.

**Patentansprüche**

1. Verwendung einer Formmasse enthaltend
   a) 40 bis 90 Gew.-% aus Einheiten, die sich vom Tetrafluorethylen ableiten, und
   b) 60 bis 10 Gew.-% aus Einheiten, die sich zu 0 bis 100 %, bezogen auf die Summe der Verbindungen I und II, von Verbindungen der Formel I ableiten

   $$CF_2 = CF - O - (CF_2-CF(CF_3)-O)_m - (CF_2)_n - CF_3 \qquad (I),$$

   worin m eine ganze Zahl von 0 bis 1 und n eine ganze Zahl von 1 bis 5 ist, und die sich zu 100 bis 0 %, bezogen auf die Summe der Verbindungen I und II, von Verbindungen der Formel II ableiten

   $$CF_2 = CF - O - (CF_2-CF(CF_3)-O)_p - (CF_2)_q - COO - R \qquad (II),$$

   worin p eine ganze Zahl von 0 bis 3 und q eine ganze Zahl von 1 bis 4 ist und R ein Wasserstoffatom, einen $C_6$-$C_{10}$-Arylrest oder eine $C_1$-$C_8$-Alkylrest bedeutet, zur Herstellung von Lichtwellenleitern.

2. Verwendung einer Formmasse nach Anspruch 1, dadurch gekennzeichnet, daß diese Einheiten enthält, welche sich von Vinylverbindungen ableiten, die mit Tetrafluorethylen und den Verbindungen der Formeln I und II copolymerisierbar sind.

3. Verwendung einer Formmasse nach Anspruch 1, dadurch gekennzeichnet, daß diese Einheiten der Formel II enthält, in welchen der Rest R Fluor-, Chlor- oder Deuteriumatome enthält.

4. Lichtwellenleiter, enthaltend eine Formmasse gemäß Anspruch 1.

5. Lichtwellenleiter nach Anspruch 4, dadurch gekennzeichnet, daß das Mantelmaterial aus einer Formmasse gemäß Anspruch 1 besteht.

6. Lichtwellenleiter nach Anspruch 4, dadurch gekennzeichnet, daß das Kernmaterial aus einem Polymeren besteht, welches Einheiten enthält, die sich von Trifluorstyrol, Pentafluorstyrol, Perfluorstyrol, Estern fluorhaltiger Alkohole der Methacrylsäure, der Acrylsäure, der 2-Fluoracrylsäure und der 2,3-Difluoracrylsäure oder deren ganz oder teilweise deuterierten Derivaten ableiten und das Polymere einen Brechungsindex von unter 1,44 aufweist.

**Claims**

1. The use of a molding compound comprising
   a) 40 to 90% by weight of units derived from tetrafluoroethylene, and
   b) 60 to 10% by weight of units derived to the extent of 0 to 100%, based on the sum of the compounds I and II, from compounds of formula I:

   $$CF_2 = CF-O-(CF_2-CF(CF_3)-O)_m-(CF_2)_n-CF_3 \qquad (I)$$

   wherein m is an integer from 0 to 1 and n is an integer from 1 to 5, and derived to the extent of 100 to 0%, based on the sum of the compounds I and II, from compounds of formula II:

   $$CF_2 = CF-O-(CF_2-CF(CF_3)-O)_p-(CF_2)_q-COO-R \qquad (II)$$

wherein p is an integer from 0 to 3, q is an integer from 1 to 4 and R is a hydrogen atom, a $C_6$-$C_{10}$ aryl radical or a $C_1$-$C_8$ alkyl radical, for the manufacture of light waveguides.

2. Use of a molding compound as claimed in claim 1, wherein said compound contains units derived from vinyl compounds which are copolymerizable with tetrafluoroethylene and the compounds of formulae I and II.

3. Use of a molding compound as claimed in claim 1, wherein said compound contains units of formula II in which the radical R contains fluorine, chlorine or deuterium atoms.

4. A light waveguide comprising a molding compound as claimed in claim 1.

5. A light waveguide as claimed in claim 4, wherein the cladding material consists of a molding compound as claimed in claim 1.

6. A light waveguide as claimed in claim 4, wherein the core material consists of a polymer containing units derived from trifluorostyrene, pentafluorostyrene, perfluorostyrene, methacrylic, acrylic, 2-fluoroacrylic and 2,3-difluoroacrylic acid esters of fluorinated alcohols, or completely or partially deuterated derivatives thereof, and the polymer has a refractive index of less than 1.44.

**Revendications**

1. Utilisation d'une masse de moulage contenant :
   a) de 40 à 90 % en poids d'unités qui dérivent du tétrafluoroéthylène, et
   b) de 60 à 10 % en poids d'unités qui dérivent de 0 à 100 %, par rapport à la somme des composés I et II, des composés de formule I

   $$CF_2 = CF - O - (CF_2\text{-}CF(CF_3)\text{-}O)_m - (CF_2)_n - CF_3 \qquad (I)$$

   où m représente un nombre entier de 0 à 1 et n représente un nombre entier de 1 à 5, et qui dérivent de 100 à 0 %, par rapport à la somme des composés I et II, des composés de formule II

   $$CF_2 = CF - O - (CF_2\text{-}CF(CF_3)\text{-}O)_p - (CF_2)_q - COO - R \qquad (II)$$

   où p représente un nombre entier de 0 à 3 et q un nombre entier de 1 à 4 et R un atome d'hydrogène, un radical aryle en $C_6$-$C_{10}$ ou un radical alkyle en $C_1$-$C_8$, pour la préparation de conducteurs d'ondes lumineuses.

2. Utilisation d'une masse de moulage selon la revendication 1, caractérisée en ce que celle-ci contient des unités qui dérivent des composés vinyliques qui sont copolymérisables avec le tétrafluoroéthylène et les composés de formules I et II.

3. Utilisation d'une masse de moulage selon la revendication 1, caractérisée en ce que celle-ci contient des unités de formule II, dans lesquelles le radical R contient des atomes de fluor, de chlore ou de deutérium.

4. Conducteur d'ondes lumineuses contenant une masse de moulage selon la revendication 1.

5. Conducteur d'ondes lumineuses selon la revendication 4, caractérisé en ce que le matériau de la chemise se compose d'une masse de moulage selon la revendication 1.

6. Conducteur d'ondes lumineuses selon la revendication 4, caractérisé en ce que le matériau du noyau se compose d'un polymère qui contient des unités qui dérivent des trifluorostyrène, pentafluorostyrène, perfluorostyrène, esters d'alcools fluorés de l'acide méthacrylique, de l'acide acrylique, de l'acide 2-fluoroacrylique et de l'acide 2,3-difluoroacrylique ou de leurs dérivés entièrement ou partiellement deutériés, et que le polymère présente un indice de réfraction inférieur à 1,44.